# EUROPÄISCHE PATENTANMELDUNG

(11) **EP 0 878 805 A1**
(43) Veröffentlichungstag der Anmeldung: **18.11.1998**
(21) Anmeldenummer: 98107054.3
(22) Anmeldetag: 17.04.1998
(51) Int. Cl.: G21C 17/01

(54) **Manipulator und Verfahren zum Arbeiten in einem flüssigkeitsgefüllten Behälter**

(30) Priorität: 30.04.1997 DE 19718386
(71) Anmelder: SIEMENS AKTIENGESELLSCHAFT, 80333 München (DE)
(72) Erfinder: Dirauf, Franz, Dipl.-Ing. (FH), 96250 Ebensfeld (DE)

(57) **Zusammenfassung**

Die Erfindung betrifft Manipulatoren (2) zum Messen, Prüfen, Warten oder Reparieren im Innenraum eines flüssigkeitsgefüllten Behälters (1), der beispielsweise ein Kernreaktordruckbehälter ist. Die Manipulatoren (2), die ein Basisteil (4) aufweisen, mit dem ein gesteuert bewegbarer Manipulatorkopf (14) in Verbindung steht, zeichnen sich durch einen bzw. drei Auftriebskörper (6) aus, mit denen ein Schwebezustand des Manipulators (2) in der Flüssigkeit einstellbar ist, und durch mindestens zwei in unterschiedliche Richtungen, insbesondere synchron, ausfahrbare Teleskoparme (10) zur starren Verbindung mit dem Behälter (1) und zur festen Positionierung. Beispielsweise ist auch ein rückstoßerzeugender Antrieb (8) vorgesehen. Es wird auch ein Verfahren zur Durchführung der genannten Arbeiten an einem nicht oder schwer zugänglichen Arbeitsort im Innenraum des genannten Behälters (2) angegeben.

## Beschreibung

Die Erfindung liegt auf dem Gebiet der fernbedienbaren Einrichtungen zum Arbeiten, insbesondere zum Messen, Prüfen, Warten oder Reparieren, in für den Menschen schwer oder nur unter erschwerten Bedingungen direkt zugänglichen Bereichen.

Sie betrifft in einer ersten Ausführungsform einen Manipulator, der ein Basisteil aufweist, mit dem ein gesteuert bewegbarer Manipulatorkopf in Verbindung steht, zum Arbeiten, insbesondere zum Messen, Prüfen, Warten oder Reparieren, im Innenraum eines flüssigkeitsgefüllten Behälters, beispielsweise eines Kernreaktordruckbehälters, mit einem Auftriebskörper. Sie betrifft in einer zweiten Ausführungsform einen Manipulator, der ein Basisteil aufweist, mit dem ein gesteuert bewegbarer Manipulatorkopf in Verbindung steht, zum Arbeiten, insbesondere zum Messen, Prüfen, Warten oder Reparieren, im Innenraum eines flüssigkeitsgefüllten Behälters, beispielsweise eines Kernreaktordruckbehälters, mit einem Auftriebskörper, mit dem ein zumindest angenäherter Schwebezustand in der Flüssigkeit einstellbar ist. Die Erfindung bezieht sich auch auf ein Verfahren zum Arbeiten, insbesondere zum Messen, Prüfen, Warten oder Reparieren, an einem nicht oder schwer zugänglichen Arbeitsort im Innenraum eines solchen flüssigkeitsgefüllten Behälters unter Einsatz eines Manipulators.

Zum Arbeiten in oben offenen Druckbehältern werden seit langem sogenannte Zentralmastmanipulatoren eingesetzt. Ein derartiges System ist beispielsweise in der Europäischen Patentanmeldung 0 155 375 beschrieben. Es besteht aus einem Mast, der sich über die gesamte Höhe zwischen der Bodenkalotte eines im wesentlichen zylinderförmigen Kernreaktordruckbehälters und einer Mastbrücke am begehbaren Reaktorflur erstreckt. Der Mast dient als Führung für einen Support, der sich vertikal bewegt und einen Horizontalausleger aufweist, an dem ein Prüfkopfsystem befestigt ist. Da der Mast im Zentrum des Behälters angebracht ist, kann für jede Vertikalposition des Supportes innerhalb kurzer Zeit ein zylinderwandförmiger Ausschnitt an der Innenwand des Behälters geprüft werden. Rundnähte lassen sich mit diesem System beispielsweise in einem einzigen Arbeitsschritt ohne Unterbrechung prüfen. Nachteilig an diesem System sind jedoch der hohe zeitliche Aufwand für seinen Auf- und Abbau sowie seine hohen Herstellungskosten. Ein besonderer Nachteil ergibt sich in Kernkraftwerken, in denen die Mastbrücke nicht vorhanden ist und deshalb zusätzlich bereitgestellt werden muß.

In einem Aufsatz von P. Popp in 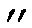 Kernenergie", 29 (1986) 10, ist auf Seite 364 offenbart, daß zur Lagestabilisierung und Vermeidung ungewollter Positionsveränderungen eines Manipulators ohne ortsfeste Auflage ein horizontales Verspannen des Manipulators im Reaktordruckbehälter geeignet ist.

Aus einem Vortrag 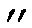 Advanced Ultrasonic Inspection System Upgrades for Reactor Vessel", gehalten auf der Tagung 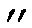 EPRI Vessel & Internals Inspection Conference" vom 11.-15.07.1994 in San Antonio, USA, und aus einer Firmenschrift der Fa. Mitsubishi Heavy Industries Ltd. aus dem Jahre 1995 (H500-N02S10E1-B-0), sowie aus einem Fachartikel in 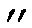 Nuclear Engineering International", Seite 40 bis 41, vom Dezember 1990, ist ein anderer Manipulator für die Prüfung von Kernreaktordruckbehältern bekannt geworden. Dieser besteht aus einer mobilen Plattform, welche einen Gelenkarm trägt. Da die Prüfarbeiten i.d.R. unter Wasser ausgeführt werden müssen, sind Teile des Manipulators gasgefüllt, wodurch eine die Gewichtskraft weitgehend kompensierende Auftriebskraft vorhanden ist. Der Manipulator ist in schwebendem Zustand durch einen Propellerantrieb innerhalb des Behälters bewegbar. Die Plattform wird mit Hilfe von Saugnäpfen an der Innenwand des Behälters befestigt und in einer Position in unmittelbarer Nähe zur Innenwand fixiert. Vor der Befestigung an der Wand ist der Manipulator zusätzlich durch einen Radantrieb fortbewegbar. Der Propellerantrieb ist auch für Bewegungen entgegen der aus Auftriebskraft und Gewichtskraft resultierenden Gesamtkraft ausgelegt.

Auf einem Vortrag 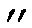 URSULA - The New Generation Reactor Vessel Inspection Robot", gehalten auf der Tagung 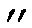 EPRI Vessel & Internals Inspection Conference" vom 11.-15.07.1994 in San Antonio, USA, sowie in einem Firmenprospekt der Fa. B&W Nuclear Technologies aus dem Jahre 1994 (PB-003 (SPIS) - 1M 6/94) wurde ein Prüfroboter offenbart, der ebenfalls Saugnäpfe aufweist, mit denen er in unmittelbarer Nähe zur Innenseite der Behälterwand an dieser fixiert wird. Der Prüfroboter wird entlang der Behälterwand bewegt, indem nur ein Teil der Saugnäpfe die Befestigung aufrechterhält, während der andere Teil der Saugnäpfe an eine neue Position bewegt wird. Die Auftriebskraft ist nur teilweise kompensiert, weshalb bei einer Bewegung abseits der Behälterwand, z.B. von einer Stelle zu einer horizontal gegenüberliegenden Stelle auf der Behälterwand, zusätzliche Hilfsmittel, z.B. eine von außen zugeführte Stange oder ein Seil, erforderlich sind.

Durch die Befestigung an der Behälterwand entfällt zwar bei den beiden letztgenannten Systemen die Notwendigkeit des Einführens eines tragenden Mastes, doch kann ein derart nahe an der Behälterwand positionierter Manipulator von einer bestimmten Position auf der Innenwand aus nur einen geringen Prüfbereich abdecken. Nachteilig an den beiden letztgenannten Systemen ist deshalb vor allem, daß sehr viele Neupositioniervorgänge nötig sind. Um einen Zusammenhang mit der bisherigen Position herstellen zu können, ist dazu jedesmal eine aufwendige (z.B. lasergestützte) Positionsvermessung erforderlich. Bei lasergestützter Positionsvermessung ergeben sich zudem Probleme, falls der Laserstrahl von einer Stelle oberhalb der Wasseroberfläche ausgeht, da die Wasseroberfläche in der Regel nicht statisch ist.

Der eklatanteste gemeinsame Nachteil der drei bekanntgewordenen Systeme liegt in dem hohen Zeitaufwand der für eine Prüfung erforderlich ist und entweder durch den notwendigen Aufund Abbau eines Zentralmastes oder durch die hohe Anzahl von Neupositioniervorgängen verursacht wird. Bei Arbeiten an Kernreaktordruckbehältern führt dieser hohe Zeitaufwand auch zu immens hohen Kosten, da während der Prüfarbeiten der Kernreaktor abgeschaltet ist.

Die Aufgabe der Erfindung besteht demzufolge darin, wenigstens einen Manipulator anzugeben, der diese Nachteile vermeidet und mit dem Arbeiten in einem flüssigkeitsgefüllten Behälter, insbesondere in einem Reaktordruckbehälter eines Kernkraftwerkes, schnell und flexibel durchgeführt werden können. Zur Lösung der geschilderten Probleme ist es ebenfalls Aufgabe der Erfindung, ein Verfahren zum Arbeiten im Innenraum eines Behälters der genannten Art zur Verfügung zu stellen, das schnell und flexibel durchgeführt werden kann.

Die auf einen Manipulator zum Arbeiten im Innenraum eines flüssigkeitsgefüllten Behälters abgestellte Aufgabe wird bezogen auf die erste Ausführungsform gemäß der Erfindung dadurch gelöst, daß
a) mindestens drei Auftriebskörper an dem Basisteil angebracht sind, mit denen ein zumindest angenäherter Schwebezustand in der Flüssigkeit einstellbar ist, und daß
b) mindestens zwei in unterschiedliche Richtungen ausfahrbare Teleskoparme vorhanden sind, mit denen eine kraftschlüssige Verbindung zu dem Behälter herstellbar und eine feste Position innerhalb desselben fixierbar ist.

Die Aufgabe, einen Manipulator anzugeben, wird bezogen auf die zweite Ausführungsform gemäß der Erfindung dadurch gelöst, daß mindestens zwei in unterschiedliche Richtungen synchron ausfahrbare Teleskoparme vorhanden sind, mit denen eine kraftschlüssige Verbindung zu dem Behälter herstellbar und eine feste Position innerhalb des Behälters und entfernt von der Behälterwand fixierbar ist.

Unter einem Teleskoparm wird in diesem Zusammenhang jeder in der Länge veränderliche Arm verstanden. Es kann sich dabei um eine aus mehreren Rohren unterschiedlichen - runden oder rechteckigen - Querschnitts bestehende Säule handeln, wobei die Rohre zur Längenänderung ineinander verschoben werden können. Es kann aber auch eine aus mehreren parallelen Schienen oder Führungen zusammengesetzte Einrichtung oder ähnliches sein. Alle diese Ausgestaltungen werden im folgenden unter dem Begriff Teleskoparm zusammengefaßt.

Im Gegensatz zu dem ersten der oben beschriebenen bekanntgewordenen Manipulatoren benötigen die Manipulatoren nach der Erfindung keinen aufwendig konstruierten und langwierig auf- und abzubauenden Zentralmast als Basis für die Fortbewegung. Sie benötigen demzufolge auch keine Mastbrüche und sind deshalb weitgehend unabhängig von der vorhandenen Infrastruktur in einem Kernkraftwerk einsetzbar. Sie müssen zur Fortbewegung oder während des Arbeitens auch nicht notwendigerweise an dem Seil eines Kranes aufgehängt sein. Vielmehr nutzen die Manipulatoren beider Ausführungsformen die Auftriebskraft aus, die infolge einer sich ohnehin im Behälter befindenden Flüssigkeit auf den jeweiligen Manipulator wirkt. Diese Auftriebskraft ist durch den bzw. die vorgesehenen Auftriebskörper verstärkt, so daß der Manipulator in der Flüssigkeit - zumindest angenähert - schwebt. Bevorzugt ist die Gewichtskraft bis auf wenige Prozent kompensierbar. Das Schweben in der Flüssigkeit ermöglicht es, den Manipulator schnell und einfach an beliebige Orte innerhalb des Behälters zu bewegen.

Mit einem Manipulator der ersten Ausführungsform, umfassend mindestens drei an dem Basisteil angebrachte Auftriebskörper, läßt sich nicht nur für den Manipulator als Gesamtsystem ein Kräftegleichgewicht in der Flüssigkeit herstellen, sondern es ist auch die Einstellung einer gewünschten - bevorzugt horizontalen - Lage des Basisteils des (in der Regel inhomogenen) Manipulators ermöglicht. Der Manipulator benötigt deshalb nur besonders wenig Infrastruktur in dem Kernkraftwerk und ist schnell horizontal ausrichtbar. Für das horizontale Nivellieren wären bei nur einem Auftriebskörper z.B. mehrere in den Behälter einführbare Führungseinrichtungen nötig. Das Nivellieren würde lange dauern.

Es ist besonders vorteilhaft, die drei Auftriebskörper jeweils im Abstand von 120° rotationssymmetrisch um eine Mittenlängsachse anzuordnen. Das Anbringen der Auftriebskörper an dem Basisteil erlaubt eine einfache Bauweise des Manipulators.

Als Mittenlängsachse wird allgemein eine gedachte, durch den geometrischen Mittelpunkt des Basisteils verlaufende Achse bezeichnet. Das Basisteil weist zweckmäßigerweise eine an die Behälterform angepaßte Form auf. So ist das Basisteil für zylinderförmige Behälter ebenfalls von im wesentlichen kreisförmigem Querschnitt. In diesem Falle ist die Mittenlängsachse identisch mit der Zylinderachse, bezüglich der Rotationssymmetrie herrscht.

Mittels der ausgefahrenen Teleskoparme ist eine feste Position des Manipulators nach einer der beiden Ausführungsformen innerhalb des Behälters fixierbar (passive Positionierung), ohne daß diese Position ständig durch hierfür evtl. vorzusehende Antriebsmittel konstant gehalten werden müßte (aktive Positionierung). Dies ist insbesondere vorteilhaft, wenn beispielsweise bei Instandhaltungsarbeiten an der Behälterwand starke mechanische Impulse auf den Manipulator übertragen werden, welche durch das Antriebsmittel nicht kompensierbar sind. Beispielsweise sind die Manipulatoren mit ihren ausgefahrenen Teleskoparmen zwischen unterschiedlichen Stellen auf der Innenseite der Behälterwand eingespreizt.

Vorteilhaft läßt sich eine Fixierung auch in Behältern unterschiedlichen Durchmessers erreichen. Mit den Teleskoparmen läßt sich die Fixierung schnell vornehmen, nach Beendigung der Arbeiten ebenso schnell wieder aufheben und der Manipulator z.B. für Transportzwecke in eine kompakte Bauform bringen.

Vorteilhaft kann das Basisteil der Manipulatoren auch an Stellen innerhalb des Behälters fest positioniert werden, die weit von der Behälterwand entfernt sind. Dadurch wird der Arbeitsbereich, der von einer bestimmten Position des Basisteils aus mit dem Manipulatorkopf erreichbar ist, vergrößert, insbesondere im Vergleich zu den beiden oben zuletzt genannten bekanntgewordenen Manipulatoren.

Bei dem Manipulator der zweiten Ausführungsform lassen sich die Teleskoparme synchron ausfahren. Hierdurch wird die Zentrierung des Basisteils des Manipulators auf einfache Weise ermöglicht. Die Zentrierung ist allgemein von Vorteil, da dadurch der Arbeitsbereich vergrößert wird, der von dem Manipulatorkopf von einer festen Position des Basisteils aus erreichbar ist. Mit dem Manipulator sind Arbeiten in dem Behälter besonders schnell durchführbar.

Unter einem Schwebezustand wird im Zusammenhang mit der Erfindung jeder Gleichgewichtszustand des Manipulators verstanden, bei dem seine Auftriebskraft gleich seiner Gewichtskraft ist. In dem Falle, daß Teile des Manipulators aus der Flüssigkeitsoberfläche hinausragen, kann dieser Gleichgewichts zustand auch ein Schwimmen sein. Als Auftriebskörper sind alle jene Bauteile des Manipulators in Betracht zu ziehen, welche eine höhere Auftriebskraft erzeugen, als die üblicherweise zum Bau von Manipulatoren verwendeten Metalle. Unter Auftriebskörper werden demzufolge nicht nur Bauteile verstanden, welche ausschließlich der Erzeugung einer erhöhten Auftriebskraft dienen, wie beispielsweise gasbefüllbare Behälter. Vielmehr kann die Funktion des Auftriebskörpers in eine andere Funktion erfüllende Bauteile des Manipulators integriert sein, z.B. durch eine entsprechende Materialauswahl.

Der Manipulator nach der Erfindung ist allgemein einsetzbar zum Arbeiten im Innenraum eines flüssigkeitsgefüllten Behälters, wobei unter einem Behälter auch räumlich begrenzte und eingefaßte Becken oder Gruben zu verstehen sind. Insbesondere eignet sich der Manipulator zum Vermessen, Prüfen, Warten oder Reparieren eines Reaktordruckbehälters in einem Kernkraftwerk, der infolge der hohen Strahlung für den Menschen nicht zugänglich ist. Reaktordruckbehälter sind während der Durchführung der genannten Arbeiten i.d.R. ohnehin mit Wasser gefüllt.

Zweckmäßig ist es, daß an einem der Auftriebskörper bzw. an dem Auftriebskörper fern- oder selbstgesteuert eine variable Auftriebskraft einstellbar ist. Dadurch läßt sich der Schwebezustand und die Lage eines der Manipulatoren jederzeit von einem außerhalb des Behälters befindlichen Platze aus einstellen, korrigieren oder nachregeln. Bevorzugt weist der Auftriebskörper hierzu eine starre Hülle auf, die mit zwei Medien unterschiedlicher Dichte in einem wählbaren Mengenverhältnis füllbar ist. Die beiden Medien können Wasser und Luft sein.

Die folgenden Ausgestaltungen und Weiterbildungen beziehen sich jeweils auf die erste und/oder zweite Ausführungsform des Manipulators.

Die Teleskoparme sind bevorzugt in Richtungen ausfahrbar, die zueinander einen Winkel von mehr als 90° einschließen. Soweit mehr als zwei Teleskoparme vorhanden sind, liegen die Teleskoparme im ausgefahrenen Zustand bevorzugt in einer gemeinsamen Ebene. Die ausgefahrenen Teleskoparme sind zweckmäßigerweise jeweils von einer Länge in der Größenordnung des Behälterdurchmessers. Bei zylinderförmigen Behältern beträgt die Länge bevorzugt in etwa den halben Behälterdurchmesser.

Beispielsweise sind drei Teleskoparme vorhanden, die jeweils an einem Ende an dem Basisteil befestigt sind. Durch diese Anordnung läßt sich bei Behältern mit kreisförmigem Querschnitt eine Zentrierung des Basisteils des Manipulators in der Mitte des Querschnitts besonders einfach erreichen.

Nach einem anderen Beispiel sind die Teleskoparme im wesentlichen rotationssymmetrisch um eine gedachte, durch das Basisteil verlaufende Achse angeordnet, wodurch die Zentrierung ebenfalls erleichtert wird. Diese Achse ist bevorzugt die Mittenlängsachse.

Eine vorteilhafte Ausgestaltung sieht einen Rückstoß erzeugenden Antrieb an dem Manipulator vor. Im Gegensatz zu einem Fremdantrieb, z.B. durch Stangen oder Seile, ist es durch einen Eigenantrieb des Manipulators möglich, den Manipulator auf einfache Weise fern- oder selbstgesteuert innerhalb des Behälters zu bewegen.

Der Antrieb kann beispielsweise als Strahltriebwerk, insbesondere als Düse, oder als Strömungsmaschine, insbesondere als Propeller, ausgebildet sein. Diese Antriebsmittel erzeugen eine zur Fortbewegung in einer Flüssigkeit ausreichende Rückstoßkraft.

Eine vorteilhafte Ausgestaltung des Manipulators betrifft einen an dem Basisteil befestigten Manipulatorarm, der den Manipulatorkopf trägt. Der Manipulatorarm weist einen linear verstellbaren Schlitten auf, an dem ein den Manipulatorkopf tragender Gelenkarm angebracht ist. Diese Anordnung bietet den Vorteil, daß der Gelenkarm bei gleichbleibendem erreichbarem Arbeitsbereich kürzer ausgeführt werden kann als bei einer Ausgestaltung ohne Schlitten. Dies trägt zur Erhöhung der Stabilität des Manipulators bei.

Der Schlitten ist bevorzugt auf einer senkrecht zu der Mittenlängsachse des Manipulators ausgerichteten Schiene bewegbar. Auf dem Basisteil ist beispielsweise eine bevorzugt um die Mittenlängsachse drehbare Drehscheibe angebracht, auf der der Schlitten senkrecht zur Mittenlängsachse in radialer Richtung bewegbar ist.

Vorteilhaft daran ist, daß - bei Behältern mit zylinderförmigem Querschnitt und bei entsprechender Ausrichtung des Basisteils relativ zu dem Behälter - ein Unterarm am (manipulatorkopfseitigen) Ende des Manipulatorarmes derart einstellbar ist, daß der Unterarm während einer vollen Umdrehung der Drehscheibe immer eine Richtungskomponente senkrecht zur Innenseite der Behälterwand aufweist, und daß ein Handgelenk zwischen dem Unterarm und dem Manipulatorkopf infolgedessen einfacher ausführbar ist. Bei Kernreaktordruckbehältern ist ferner der Manipulatorkopf mittels des Schlittens auf einfache Weise auch in den Innenraum der Stutzen einfahrbar.

Unter dem aus Schiene und Schlitten gebildeten System sind ohne jegliche Einschränkung beliebige Linearverstelleinrichtungen zu verstehen. Der Schlitten kann auch ein Reiter, ein Wagen oder ähnliches, die Schiene allgemein eine lineare Zwangsführung sein.

Gemäß einer weiteren Möglichkeit zur Ausgestaltung des Manipulators sind zwei Manipulatorköpfe vorgesehen. Dadurch wird eine zusätzliche Beschleunigung der Meß-, Prüf-, Wart- oder Reparaturarbeiten erzielt.

Bevorzugt werden die Manipulatorköpfe von je einem an dem Basisteil befestigten Manipulatorarm getragen, mittels dieses Armes sie zumindest entweder in einen Raumwinkelbereich oberhalb oder in einen Raumwinkelbereich unterhalb des Basisteiles bewegbar sind. Diese Anordnung führt zu einer besonders kompakten Bauweise des Manipulators und bewirkt gleichzeitig, daß z.B. eine zu bearbeitende Innenwand des Behälters besonders schnell und effizient abgerastert werden kann.

Bei einem Kernreaktordruckbehälter kann damit besonders vorteilhaft beispielsweise die Bodenkalotte von dem einen Manipulatorkopf bearbeitet werden, während ein anderer Manipulatorkopf (bereits) im zylindrischen Teil des Reaktordruckbehälters arbeitet.

Besonders vorteilhaft an der Anordnung mit mindestens zwei Manipulatorköpfen, die einen Raumwinkelbereich oberhalb bzw. unterhalb des Basisteils abdecken, ist auch die Tatsache, daß ein derartiger Manipulator die Position innerhalb des Behälters, an welcher einer der Manipulatorköpfe arbeitet, in einem weiten Bereich quasi selbständig vermessen kann. Hierzu wird der eine Manipulatorkopf an eine Stelle bekannter Position innerhalb des Behälters gebracht und über die Stellung der Manipulatorarme die Position des zweiten Manipulatorkopfes berechnet.

An dem Manipulator kann beispielsweise auch ein Drucksensor vorgesehen sein, der den hydrostatischen Druck in der Flüssigkeit mißt. Damit läßt sich die Tauchtiefe des Manipulators ermitteln, was insbesondere vorteilhaft ist, um mit dem Manipulator, bzw. mit seinem Basisteil, eine gewünschte Höhe über dem Behälterboden anzufahren. Ganz besonders vorteilhaft ist ein derart ausgestalteter Manipulator, falls in dem Behälter an einer bekannten Stelle ein weiterer Drucksensor zur Ermittlung des Druckes in der Flüssigkeit vorgesehen ist. Dann läßt sich eine Tauchtiefe des Manipulators relativ zum Behälter und unabhängig vom jeweiligen Wasserstand und von Schwankungen der Wasserdichte bestimmen.

Eine mögliche Ausgestaltung des Manipulators sieht mindestens einen Neigungsmesser oder ein Inklinometer vor. Damit lassen sich Abweichungen von einer gewünschten Ausrichtung des Manipulators, insbesondere des Basisteils, ermitteln und der Auftriebskörper gegebenenfalls entsprechend ansteuern, bis die gewünschte Lage mit ausreichender Genauigkeit erreicht ist. Bei Kernreaktordruckbehältern steht der zylindrische Teil i.d.R. senkrecht zur Bodenfläche. Das Basisteil des Manipulators läßt sich in diesem Fall in eine exakte horizontale Lage bringen, wodurch Arbeitsvorgänge erleichtert werden, bei denen von dem Manipulatorkopf eine vollständige kreisförmige Umfanglinie in dem zylindrischen Teil in einem Durchgang abgefahren werden muß.

Die verfahrensbezogene Aufgabe wird gemäß der Erfindung gelöst durch ein Verfahren zum Arbeiten an einem nicht oder schwer zugänglichen Arbeitsort im Innenraum eines flüssigkeitsgefüllten Behälters unter Einsatz eines Manipulators, das dadurch gekennzeichnet ist, daß der Manipulator in der Flüssigkeit in einen angenäherten Schwebezustand versetzt wird, und daß ein Basisteil des Manipulators in einer Höhe über dem Behälterboden, von der aus der Arbeitsort erreichbar ist, auf einer Querschnittsfläche durch den Behälter zumindest angenähert zentriert und in dieser Position durch kraftschlüssiges und lösbares Verbinden mit dem Behälter fixiert wird.

Der Manipulator ist bevorzugt ein Manipulator nach der Erfindung.

Die Querschnittsfläche steht bevorzugt senkrecht auf einer - i.a. vertikalen - Längsachse des Behälters.

Beispielsweise wird das Basisteil auf der vertikalen Längsachse durch den Mittelpunkt des Behälters positioniert. Als Mittelpunkt des Behälters wird der durch die Innenseite der Behälterwand definierte geometrische Mittelpunkt bezeichnet. Bei zylinderförmigen Behältern ist die vertikale Längsachse identisch mit der Zylinderachse.

Der schwebende Manipulator läßt sich in vorteilhafter Weise schnell und einfach zum Arbeitsort bewegen. Der mit seinem Basisteil auf einer definierten Stelle zentrierte Manipulator verfügt über einen großen Arbeitsbereich und erlaubt auf einfache Weise die Durchführung von Arbeiten entlang von kompletten Umfanglinien des Behälters. Der fest bzw. starr positionierte Manipulator ist in der Lage, während des Arbeitens große Kräfte auf die Behälterwand und dgl. zu übertragen. Nachdem ein bestimmter, von dem Manipulatorkopf erreichbarer Arbeitsbereich bearbeitet ist, wird die Verbindung gelöst und der Manipulator an eine andere Stelle bewegt, in der das Basisteil erneut starr und lösbar mit dem Behälter verbunden werden kann.

Bevorzugt wird der Manipulator nach dem Rückstoßprinzip bewegt. Damit lassen sich in ausreichendem Maße Kräfte erzeugen, um den Manipulator fern- oder selbstgesteuert in der Flüssigkeit zu einer anderen Stelle hin zu bewegen.

Das Verfahren ist auch derart ausgestaltbar, daS der Manipulator unter Ausnutzung des hydrostatischen Auftriebs in eine gewünschte Arbeitslage ausgerichtet wird. Bevorzugt wird eine horizontale Lage des Basisteils eingestellt. Hierdurch wird ebenfalls die Durchführung von Arbeiten entlang einer kompletten Umfanglinie des Behälters erleichtert. Die Arbeitslage kann z.B. mittels mehrerer Neigungsmesser erfaßt werden.

In einer besonderen Variante des Verfahrens wird von einer auf dem Manipulator angebrachten Sensoreinheit eine von einer Stelle mit bekannter Position reflektierte Strahlung detektiert, und daraus die Position des Manipulators, speziell sein Abstand von der Behälterwand, bestimmt. Damit läßt sich in vorteilhafter Weise die Position eines sukzessive im Behälter bewegten Manipulators bestimmen und beispielsweise bei einer Prüfung der Behälterwand das Prüfergebnis der einzelnen Prüfbereiche rasterartig zu einem Gesamtbild der Behälterwand zusammenfügen. Die Stelle bekannter Position kann entweder durch ein erkennbares, dem Behälter eigenes Merkmal gegeben sein, z.B. einen Stutzen, einen Flansch oder durch eine Konsole in der Bodenkalotte. Andererseits kann eine solche Stelle auch durch Einführen geeigneter (reflektierender) Meßhilfsmittel, etwa einer Meßlatte, in den Behälter erzeugt werden.

Bei der Strahlung, kann es sich sowohl um elektromagnetische als auch um akustische Wellen handeln. Besonders vorteilhaft ist die Verwendung von Ultraschall, der von einer auf dem Manipulator angebrachten Quelle ausgesendet wird. Für zahlreiche Prüfarbeiten ist die Ultraschallquelle ohnehin nötig.

Ein Ausführungsbeispiel eines Manipulators nach der Erfindung, der beide Ausführungsformen aufweist, wird anhand zweier Zeichnungen näher erläutert. Es zeigt:
- FIG 1: den Manipulator innerhalb eines Behälters in Arbeitsstellung und
- FIG 2: den Manipulator in Transportstellung.

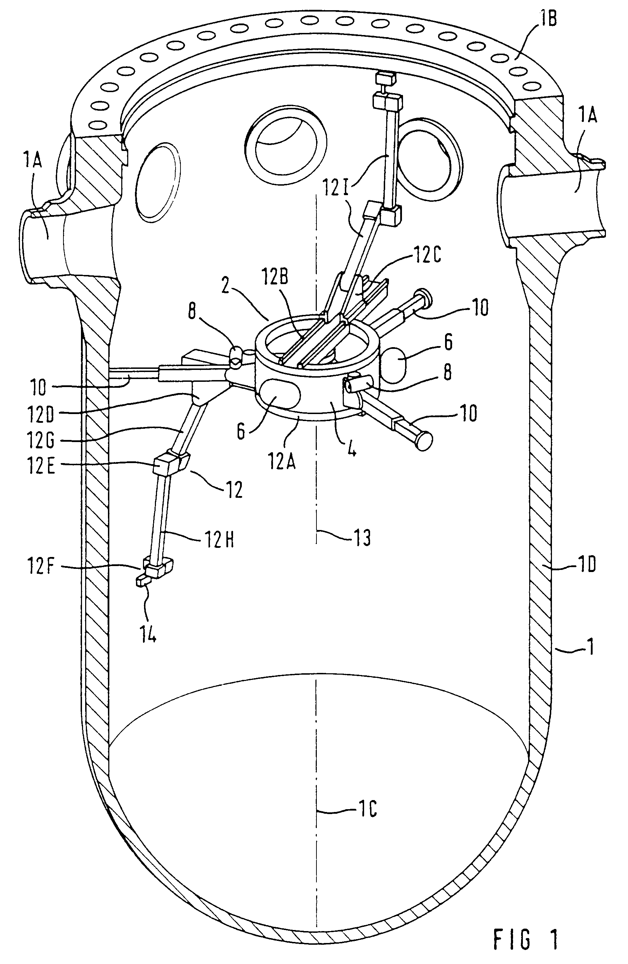

Ein insgesamt mit 2 bezeichneter Manipulator dient zur Durchführung von Arbeiten in einem wassergefüllten Kernreaktordruckbehälter 1, wie in Figur 1 dargestellt. Der Manipulator 2 enthält als zentrales Teil ein zylinderförmiges, plattformartiges Basisteil 4, an dem drei Auftriebskörper 6, drei Antriebe 8, drei Teleskoparme 10 sowie zwei Manipulatorarme 12 angebracht sind. In dem Basisteil 4 ist Raum für die notwendige Elektronik.

Die drei Auftriebskörper 6 sind rotationssymmetrisch bzgl. der Zylinderachse 13, jeweils im Abstand von 120° um das Basisteil angebracht. Sie bestehen aus je einem druckfesten Behälter, der mit Gas oder Luft gefüllt ist. Darin befindet sich eine flexible Blase, die zur Verminderung des Auftriebs über ein elektrisch gesteuertes Ventil mit Wasser gefüllt werden kann und aus der zur Erhöhung des Auftriebs über ein zweites Ventil Wasser abgelassen werden kann. Da die Auftriebskörper 6 als steife Druckkörper ausgeführt sind, wird das Verdrängungsvolumen durch den umgebenden Wasserdruck nicht verändert und die Auftriebskraft ist weitgehend unabhängig von der Tauchtiefe.

Die Teleskoparme 10 sind bezüglich des Basisteils 4 in radialer Richtung ausfahrbar und jeweils in den Zwischenräumen zwischen den Auftriebskörpern 6 am Basisteil 4 befestigt. Die Teleskoparme 10 weisen im gezeichneten Beispiel ineinander verschiebbare Rohre rechteckigen Querschnitts auf. Solche Rohre sind für den Unterwassereinsatz besonders gut geeignet.

Durch nicht dargestellte Federelemente an den Teleskoparmen 10 wird für die Fixierung des Basisteils 4 eine vorbestimmte Spannkraft der Arme 10 gegen die Wand 1D des Behälters 1 eingestellt.

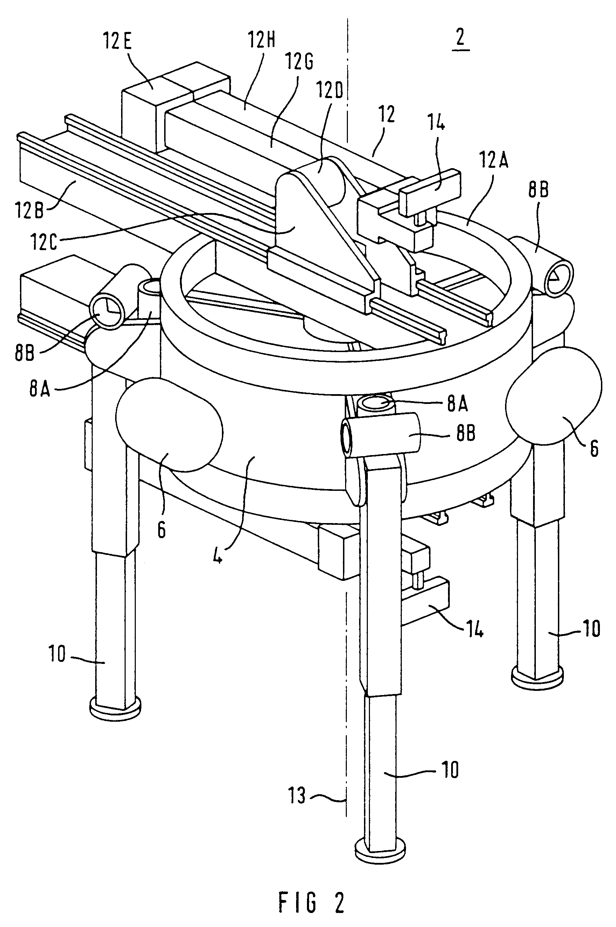

In den genannten Zwischenräumen am Basisteil 4 befinden sich auch die drei Antriebe 8. Diese bestehen aus je einem Vertikalantrieb 8A und einem Horizontalantrieb 8B (Fig. 2). Sowohl der Vertikal- als auch der Horizontalantrieb sind als Propeller ausgebildet.

Die Figur 1 zeigt den Manipulator 2 in einer Arbeitsstellung, in der das Basisteil 4 in eine horizontale Lage justiert und durch gleichmäßiges und synchrones Aus fahren der Teleskoparme 10 auf der Behälterlängsachse 1C des zylinderförmigen Behälters 1 zentriert wurde. Gleichzeitig ist das Basisteil 4 des Manipulators 2 durch das Ausfahren der Teleskoparme 10 fest im Behälter 1 verspreizt.

Von dieser stabilen Arbeitslage aus lassen sich die in Figur 1 gezeichneten zwei Manipulatorarme 12 unabhängig voneinander in großen Raumwinkelbereichen schwenken. Die beiden Manipulatorarme 12 sind symmetrisch oberhalb und unterhalb des Basisteils 4 angeordnet. Jeder Manipulatorarm 12 besteht zunächst aus einem auf dem Basisteil 4 drehbaren Drehkranz 12A, der eine Schiene 12B trägt, auf der ein Schlitten 12C linear verfahrbar ist. Die Bezeichnung eines an dem Schlitten befestigten Gelenkarmes 12I erfolgt in Anlehnung an die Bezeichnung eines menschlichen Armes. Der Gelenkarm 12I besteht aus einem Oberarm 12G und einem Unterarm 12H, an dem der Manipulatorkopf 14 sitzt, sowie aus drei Gelenken. Es sind dies ein auf dem Schlitten 12C angebrachtes Schultergelenk 12D, ein ein Abknicken von Oberarm 12G zu Unterarm 12H erlaubendes Ellbogengelenk 12E sowie ein unmittelbar vor dem Manipulatorkopf 14 sitzendes Handgelenk 12F.

Das Handgelenk weist nur 2 Freiheitsgrade auf, da der Unterarm 12H infolge der speziellen Anordnung der Schiene 12B senkrecht zur Zylinderachse 13 stets derart ausrichtbar ist, daß eine gedachte lineare Verlängerung des Unterarmes 12H die Zylinderachse 13 schneidet, oder anders formuliert, daß der Unterarm 12H immer eine Richtungskomponente senkrecht zur Innenseite der Behälterwand aufweist.

Die vorteilhafte mittige Lage des Basisteils 4 hat zur Folge, daß der Manipulator 2 aus der gezeichneten Arbeitsposition heraus eine Vielzahl von Prüfungen an dem Kernreaktordruckbehälter 1 vornehmen kann, ohne die Lage des Basisteils 4 innerhalb des Behälters 1 verändern zu müssen. Beispielsweise können in dieser Position von dem oberen Manipulatorarm und - kopf am Behälter befindliche Stutzen 1A vermessen werden, während der untere Manipulatorarm und -kopf im zylindrischen Teil der Wand 1D des Kernreaktordruckbehälters 1 arbeiten. Da die Lage der Stutzen 1A bekannt ist, und/oder der Manipulator 2 diese mit einem nicht gezeichneten Ultraschallsensor detektieren kann, läßt sich aus der Stellung und Ausrichtung der Manipulatorarme 12 auch ermitteln, an welcher Stelle der untere Manipulatorarm und -kopf gerade arbeiten.

Nach Beendigung der Arbeiten in der gezeichneten Arbeitsposition, können die Teleskoparme 10 eingefahren und der Manipulator 2 unter Einsatz seiner Auftriebskörper 6 und seines Antriebs 8 beispielsweise tiefer in den Behälter 1 gesenkt werden. An einer neuen gewünschten Arbeitsposition werden die Teleskoparme 10 wieder ausgefahren und das Messen, Prüfen usw. beginnt von neuem.

In Figur 2 ist der in Figur 1 dargestellte Manipulator 2 vergrößert und in einer Transportstellung gezeichnet. Um eine praktikable Transportstellung zu erreichen, sind die Teleskoparme 10 schwenkbar am Basisteil 4 befestigt. In der gezeigten Stellung kann der Manipulator 2 aber auch zum Arbeiten an Stellen eingesetzt werden, an denen das in Figur 1 gezeigte Einspreizen in den Behälter 1 nicht möglich ist. In diesem Falle wird der Manipulator 2 z.B. durch sein Eigengewicht auf einer Bodenfläche fixiert. Für Transportzwecke wird der Schlitten 12C eingefahren und der aus Oberarm 12G und Unterarm 12H bestehende Gelenkarm 12I samt Manipulatorkopf 14 an das Basisteil 4 angelegt.

Beim Anfahren einer gewünschten Position innerhalb des Kernreaktordruckbehälters 1 wird die nötige Höhen- bzw. Tiefeninformation über einen hochpräzisen Drucksensor gewonnen. Im Reaktordruckbehälter sind zwei weitere Drucksensoren in definiertem vertikalen Abstand zum Deckelflansch 1B (Fig. 1) befestigt.

Ist die gewünschte Tiefe erreicht, werden die Teleskoparme 10 synchron ausgefahren. Das Basisteil 4 wird somit näherungsweise auf der Behälterlängsachse 1C positioniert und bzgl. der Behälterwand zentriert. Damit ist die gewünschte Position des Manipulators 2 bzw. des Basisteils 4 innerhalb des Behälters 1 in zwei Ortskoordinaten näherungsweise erreicht. Eine azimutale Ausrichtung des Basisteils 4 um die Behälterlängsachse 1C - entsprechend der verbleibenden dritten Ortskoordinate - ist i.d.R. nicht nötig, da der Manipulatorarm 12 mit seinem Drehkranz 12A ohnehin drehbar auf dem Basisteil 4 gelagert ist.

Zur Einstellung einer angenäherten horizontalen Lage (2 Freiheitsgrade) des Basisteils 4 an der gewünschten Position dienen (nicht explizit dargestellte) elektronische Inklinometer.

Nachdem der Manipulator 2 in der gewünschten, näherungsweise eingestellten Position mittels der Teleskoparme 10 mit dem Behälter 1 verbunden ist, wird die exakte Position des Basisteils 4 vermessen, die zur Aufzeichnung und Auswertung von Meß- und Prüfdaten erforderlich ist.

Die Messung von zwei Ortskoordinaten, nämlich der exakten Höhe und des exakten Azimutalwinkels, geschieht durch Vermessen von in den Behälter 1 eingeführten ortsbekannten Hilfsmitteln oder von ortsbekannten Reaktordruckbehälterbauteilen unter Zuhilfenahme der Ultraschallmeßtechnik (Laufzeitmessung). Diese beiden Koordinaten sind aber auch dadurch bestimmbar, daß einer der beiden Manipulatorköpfe 14 an einer bekannten Stelle positioniert wird, und aus der Stellung des zugehörigen Manipulatorarmes 12 die Position des Basisteils 4 ermittelt wird.

Zur Messung der dritten Ortskoordinate, der radialen Lage in Bezug auf die Längsachse 1C des Behälters 1, wird eine Exzentrizität in der Lage des Basisteils 4 dadurch gemessen, daß ein auf dem Manipulator 2 angeordneter Ultraschallsender und ein zugehöriger Ultraschallsensor über den gesamten Umfang von 360° um die Längsachse 1C eine Abstandsmessung durchführen.

Die Arbeit des Manipulators 2, insbesondere. das Anfahren einer gewünschten Position des Basisteils 4, die exakte Vermessung dieser Position, die Bewegung der Manipulatorarme 12, sowie die Verarbeitung von anfallenden Meßdaten werden von einem Computersystem gesteuert, wobei von einem Benutzer über einen Steuerknüppel oder eine sog. 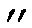 6D-Steuerkugel" gewünschte Bewegungen des Manipulators 2 oder des Manipulatorkopfes 14 vorgebbar sind.

## Patentansprüche

1. Manipulator (2), der ein Basisteil (4) aufweist, mit dem ein gesteuert bewegbarer Manipulatorkopf (14) in Verbindung steht, zum Arbeiten, insbesondere zum Messen, Prüfen, Warten oder Reparieren, im Innenraum eines flüssigkeitsgefüllten Behälters (1), beispielsweise eines Kernreaktordruckbehälters, mit einem Auftriebskörper (6),
**dadurch gekennzeichnet,** daß
a) mindestens drei Auftriebskörper (6) an dem Basisteil (4) angebracht sind, mit denen ein zumindest angenäherter Schwebezustand in der Flüssigkeit einstellbar ist, und daß
b) mindestens zwei in unterschiedliche Richtungen ausfahrbare Teleskoparme (10) vorhanden sind, mit denen eine kraftschlüssige Verbindung zu dem Behälter (1) herstellbar und eine feste Position innerhalb desselben fixierbar ist.

2. Manipulator (2), der ein Basisteil (4) aufweist, mit dem ein gesteuert bewegbarer Manipulatorkopf (14) in Verbindung steht, zum Arbeiten, insbesondere zum Messen, Prüfen, Warten oder Reparieren, im Innenraum eines flüssigkeitsgefüllten Behälters (1), beispielsweise eines Kernreaktordruckbehälters, mit einem Auftriebskörper (6), mit dem ein zumindest angenäherter Schwebezustand in der Flüssigkeit einstellbar ist, **dadurch gekennzeichnet,** daß mindestens zwei in unterschiedliche Richtungen synchron ausfahrbare Teleskoparme (10) vorhanden sind, mit denen eine kraftschlüssige Verbindung zu dem Behälter (1) herstellbar und eine feste Position innerhalb des Behälters (1) und entfernt von der Behälterwand (1D) fixierbar ist.

3. Manipulator nach einem der Ansprüche 1 oder 2,
**dadurch gekennzeichnet**, daß an einem der Auftriebskörper (6) bzw. an dem Auftriebskörper (6) fern- oder selbstgesteuert eine variable Auftriebskraft einstellbar ist.

4. Manipulator nach einem der Ansprüche 1 bis 3,
**dadurch gekennzeichnet**, daß drei Teleskoparme (10) vorhanden sind, die jeweils an einem Ende an dem Basisteil (4) befestigt sind.

5. Manipulator nach einem der Ansprüche 1 bis 4,
**dadurch gekennzeichnet**, daß die Teleskoparme (10) im wesentlichen rotationssymmetrisch um eine gedachte, durch das Basisteil (4) verlaufende Achse (13) angeordnet sind.

6. Manipulator nach einem der Ansprüche 1 bis 5,
**gekennzeichnet durch** einen rückstoßerzeugenden Antrieb (8).

7. Manipulator nach einem der Ansprüche 1 bis 6,
**dadurch gekennzeichnet**, daß der Manipulatorkopf (14) von einem an dem Basisteil (4) befestigten Manipulatorarm (12) getragen wird, der einen linear verstellbaren Schlitten (12C) aufweist, an dem ein den Manipulatorkopf (14) tragender Gelenkarm (12I) angebracht ist.

8. Manipulator nach einem der Ansprüche 1 bis 7,
**dadurch gekennzeichnet**, daß zwei Manipulatorköpfe (14) vorgesehen sind.

9. Manipulator nach einem der Ansprüche 1 bis 8,
**dadurch gekennzeichnet**, daß mehrere Manipulatorköpfe (14) von je einem an dem Basisteil (4) befestigten Manipulatorarm (12) getragen und mittels des Manipulatorarmes (12) zumindest entweder in einen Raumwinkelbereich oberhalb oder in einen Raumwinkelbereich unterhalb des Basisteils (4) bewegbar sind.

10. Manipulator nach einem der Ansprüche 1 bis 9,
**gekennzeichnet durch** einen den hydrostatischen Druck in der Flüssigkeit messenden Drucksensor.

11. Manipulator nach einem der Ansprüche 1 bis 10,
**gekennzeichnet durch** mindestens einen Neigungsmesser.

12. Verfahren zum Arbeiten, insbesondere zum Messen, Prüfen, Warten oder Reparieren, an einem nicht oder schwer zugänglichen Arbeitsort im Innenraum eines flüssigkeitsgefüllten Behälters (1), beispielsweise eines Kernreaktordruckbehälters, unter Einsatz eines Manipulators (2), der bevorzugt ein Manipulator nach einem der Ansprüche 1 bis 11 ist,
**dadurch gekennzeichnet**, daß der Manipulator (2) in der Flüssigkeit in einen angenäherten Schwebezustand versetzt wird, und daß ein Basisteil (4) des Manipulators (2) in einer Höhe über dem Behälterboden, von der aus der Arbeitsort erreichbar ist, auf einer Querschnittsfläche durch den Behälter (1) zumindest angenähert zentriert und in dieser Position durch kraftschlüssiges und lösbares Verbinden mit dem Behälter (1) fixiert wird.

13. Verfahren nach Anspruch 12,
**dadurch gekennzeichnet**, daß der Manipulator nach dem Rückstoßprinzip bewegt wird.

14. Verfahren nach einem der Ansprüche 12 oder 13,
**dadurch gekennzeichnet**, daß der Manipulator unter Ausnutzung des hydrostatischen Auftriebs in eine gewünschte Arbeitslage ausgerichtet wird.

15. Verfahren nach einem der Ansprüche 12 bis 14,
**dadurch gekennzeichnet**, daß von einer auf dem Manipulator angebrachten Sensoreinheit eine von einer Stelle mit bekannter Position reflektierte Strahlung detektiert und daraus die Position des Manipulators bestimmt wird.
